# EUROPEAN PATENT APPLICATION

(11) **EP 1 967 157 A1**
(43) Date of publication of application: **10.09.2008**
(21) Application number: 07004467.2
(22) Date of filing: 05.03.2007
(51) Int. Cl.: A61C 8/00

(54) **Hybrid two-part dental implant**

(71) Applicant: Ziterion GmbH, 97215 Uffenheim (DE)
(72) Inventor: Kahdemann, Steffen, 97215 Uffenheim (DE)
(74) Representative: Vossius, Volker

(57) **Abstract**

The present invention relates in general to the field of implant dentistry, namely to to a hybrid two-part dental implant made of biocompatible ceramics and a biocompatible synthetic material, wherein said two-part medicinal device provides a basis for a crown or superstructure, which is easy to handle by a dentist. The present invention furthermore relates to the use of abutments made of biocompatible synthetic material in connection with dental implants made of biocompatible ceramics for dental prosthetics.

## Description

The present invention relates in general to the field of implant dentistry, namely to a hybrid two-part dental implant made of biocompatible ceramics and a biocompatible synthetic material, wherein said two-part medicinal device provides a basis for a crown or superstructure, which is easy to handle by a dentist. The present invention furthermore relates to the use of abutments made of biocompatible synthetic material in connection with dental implants made of biocompatible ceramics for dental prosthetics.

### BACKGROUND OF THE INVENTION

In the last decades artificial bone structures have increasingly been used for implantation in order to replace natural bones lost due to, e.g. degeneration, degradation or injury. This implantations have been performed on bones and tooth roots and have afforded good results in the remedy of defects or the recovery of functions thereof. Dental implants are commonly used to support fixed or removable prosthesis of patients when a patient's natural roots have been lost. Therefore, it is essential to provide an adequate foundation onto which a dentist can rebuild a dentition. As more people want to take advantage of more conservative approaches offered by implant dentistry, e.g., using a single implant rather that cutting down adjacent teeth to support a short span bridge to replace a missing tooth, implant dentistry has gained more and more popularity.

For dental implants it is important to be made of a non-corrosive material, which must be compatible with the surrounding tissue and which does not provoke any immunologic reactions. Usually selected metals and/or selected ceramic materials are used for implants. Examples of metallic materials which have mainly been used for preparation of artificial bones or tooth roots comprise cobalt-chromium alloys, stainless steel, titanium and tantalum. On the other hand, as ceramic materials, alumina or materials comprising mainly carbon have recently been employed.

Metallic materials are excellent in mechanical strength, particularly in impact strength, however, they lack affinity for living tissue. Additionally, when a metallic implant is used, metal ions are dissolved out of the implant and may be toxic to the bone and soft tissue cells surrounding the implant. In addition, bone formation is abstracted, probably because of the larger thermal conductivity of the metallic implant if compared to a normal root. Among the metallic materials titanium, which is passivated with a thin, inert titanium oxide layer and tantalum have proven to have superior corrosion resistance and hence have been employed as fixed plates for sculls of fractured parts of bones and implants of jawbones.

Ceramic materials on the other hand show a good affinity to bones. Growing bone tissue, in particular osteoblasts can penetrate into fine pores of the ceramic materials, leading to a strong fixation. In addition, there are no adverse reactions between the ceramic material and the tissue. Further, since they are resistant to corrosion or decomposition ceramic materials have excellent durability. However, most ceramic materials possess poor impact strength, and are difficult and expensive to manufacture.

A dental implant usually comprises an implant part, intended to be implanted in the bony tissue of the mandible or of the maxilla, and a post or abutment piece, which can be transfixed onto the implant body, so that it stands up above the implant body in order to be able to accept a dental prosthesis. A so-called one-part dental implant comprises the implant part and the abutment part in one piece, in contrast, a two-part dental implant, as the name implies, is made of two pieces, thus the implant part is separable from the abutment part and is connected to the abutment part through, for example, a screw.

Although the two-part design is more difficult to manufacture, it has the advantage over the one-part design that the implant can be inserted into the bone and that the gingival tissue can be closed over the implant to allow undisturbed ingrowth of bone tissue and implantation into the bone over a course of several month, typically 3 to 6 months. In a second phase the abutment part is attached to the implant part and a crown or superstructure is attached to the abutment part.

WO 03/045368 A1 discloses a one-part dental implant comprising an anchor part for anchoring the implant in the bone and a mounting part for receiving a prosthetic superstructure. The anchor part and the mounting part are configured in one piece of a zirconium oxide-based material. At least sections of the external surface of at least the anchor part are pre-treated using a subtractive removal method or are provided with a coating which supports ossification.

WO 2004/096075 A1 describes a one-part dental implant comprising a base body with a threaded section and a pin for mounting a dental crown, wherein the body base being in one piece. In addition, this one-piece base body is at least largely made from zirconium oxide or a mixture of zirconium oxide and aluminium.

EP 1 570 804 A1 describes a two-part dental implant, which comprises an outer body made of ceramic material or metal and an inner body made of metal or ceramic material, provided that when the outer body is made of metal the inner body is made of ceramic material and when the outer body is made of ceramic material the inner body is made of metal.

WO 2005/044133 discloses a two-part dental implant, which consists of a ceramic base body comprising a threaded part and a ceramic post section, onto which a crown is secured. The base body is divided, so that the post elements surrounding the post section, can be removed from the remaining base body comprising the threaded part.

WO 00/32134 describes a two-part implant made of metal, ceramic or glass, which is designed so that the areas intended for bone apposition exhibit a scalloped appearance, including both convex, and concave patterns to follow the naturally occurring bone morphology.

Currently there are different techniques possible which are primarily used for producing dental implants made of ceramic materials for example: forming of a ceramic body, e.g. by injection moulding or isopressing, or grinding out of a densely sintered like HIP (High Isostatic Pressing) ceramic blank.

Injection moulding has the advantages that a serial production is possible and that almost all designs of a dental implant are possible. However, the design of a prototype injection mould is difficult and/or expensive and therefore the variability of this method, i.e. the number of different implant designs which can be produced economically is quite low. Since in most cases a postproduction is needed, the material is not densely enough sintered at the injection moulding step, leading to defects in the material and, thus, to a high rejection rate.

Grinding out of a densely sintered HIP cylindrical blank has the advantage that it is very precise due to the CAD/CAM-technique and thus a high variability in the design of the dental implant is possible. Since the material is already densely sintered, the rejection rate is very low. However, it is an expensive method and due to the hardness of the material it is difficult to grind indentations into the implant body, such as it is needed, for example, for a conical internal connection. Further, grinding the material leads to so-called mini-cracks (rifts), which might have an influence on the quality and stability of the implant. Thus, with this method it is nearly impossible to provide an internal connection having securing means (antirotation), as well as to provide a screwed joint.

The two-part ceramic dental implant designs known from the prior art suffer among others from the fact that they do not yet provide a design suitable to be produced by an affordable technique known in the art, they are not amenable to processing steps by the dentist during the implantation procedure and they do not provide a durable connection between the two-parts of the dental implant.

### SUMMARY OF THE INVENTION

In one aspect the present invention provides a hybrid two-part dental implant comprising:
(i) a dental implant (1) made of biocompatible ceramics comprising an outer threaded part (2) and a contact region (3) for contacting the contact region (14) of an abutment (12), wherein said contact region (3) comprises an indentation (4a) or a protrusion (4b) suitable to insert a protrusion (15a) or to be inserted into an indentation (15b) of said abutment (12), wherein the contact surface of said indentation (4a) or protrusion (4b) with said protrusion (15a) or indentation (15b) is free or essentially free of threaded parts and wherein said contact region (3) further comprises securing means (5) in the form of a multifaced protrusion (6) or indentation (7) preventing rotation of an engaged abutment (12), and
(ii) an abutment (12) made of a biocompatible synthetic material, comprising a prosthetic head (13) and a contact region (14) for contacting said contact region (3) of said dental implant (1), wherein said contact region (14) comprises a protrusion (15a) or an indentation (15b), suitable to be inserted into an indentation (4a) or suitable to insert a protrusion (4b) comprised in said contact region (3) of said dental implant (1), wherein said contact region (14) further comprises securing means (16) in the form of a multifaced protrusion (17) or indentation (18) preventing rotation of said abutment (12) with respect to said dental implant (1), if engaged with said securing means (5).

In a further aspect the present invention provides a hybrid two-part dental implant comprising:
(i) a dental implant (1) made of biocompatible ceramics comprising an outer threaded part (2) and a contact region (3) for contacting the contact region (14) of an abutment (12), wherein said contact region (3) comprises an indentation (4) suitable to insert a screw, wherein the contact surface of said indentation (4) with said screw comprises a threaded part and wherein said contact region (3) further comprises securing means (5) in the form of a multifaced protrusion (6) or indentation (7) preventing rotation of an engaged abutment (12), and
(ii) an abutment (12) made of a biocompatible synthetic material, comprising a prosthetic head (13) and a contact region (14) for contacting the contact region (3) of said dental implant (1) and a bore (19) extending through said prosthetic head and through the contact region (14), suitable to insert a screw into said dental implant (1), wherein said contact region (14) further comprises securing means (16) in the form of a multifaced protrusion (17) or indentation (18) preventing rotation of said abutment (12) with respect to said dental implant (1), if engaged with said securing means (5).

In a preferred embodiment the hybrid two-part dental implant of the present invention further comprises a screw made of biocompatible ceramics or biocompatible synthetic material.

In a preferred embodiment of the hybrid two-part dental implant of the present invention the thread-profile of said outer threaded part (2) of said dental implant (1) comprises an apical flank and a distal flank, wherein an acute angle (β) between the apical flank and the longitudinal axis is smaller than an acute angle (γ) between the distal flank and the longitudinal axis.

In a preferred embodiment of the hybrid two-part dental implant of the present invention a surface area of said outer threaded part (2) of the dental implant (1) has a micro-roughness of between 2 micron and 50 micron.

In a preferred embodiment of the hybrid two-part dental implant of the present invention said outer threaded part (2) of the dental implant (1) has a length of between 5 and 20 mm and an outer diameter of between 2 and 7 mm.

In a preferred embodiment of the hybrid two-part dental implant of the present invention the apical flank of the dental implant (1) has an acute angle (β) to the longitudinal axis of between 5 and 20 degree; the distal flank has an acute angle (γ) to the longitudinal axis of between 40 and 70 degree.

In a preferred embodiment of the hybrid two-part dental implant of the present invention said securing means (5) of the dental implant (1) is of polygonal shape (8).

In a preferred embodiment of the hybrid two-part dental implant of the present invention the dental implant (1) further comprises a transgingival part (9) in one piece.

In a preferred embodiment of the hybrid two-part dental implant of the present invention the biocompatible ceramics comprises a ceramic material selected from the group consisting of zirconium oxide, aluminium oxide, yttrium oxide, hafnium oxide, silicon oxide, magnesium oxide, cerium oxide and mixtures thereof.

In a preferred embodiment of the hybrid two-part dental implant of the present invention the biocompatible synthetic material is selected from the group consisting of polycarbonate (PC), polyamide (PA), polyimide (PI), polyetheretherketone (PEEK), polyphenylenesulfide (PPSE), epoxide resin (EP), unsaturated polyester (UP), phenol resin (PF), melamine resin (MF), cyanate ester (CA), polytetrafluoroethylene (PTFE) and mixtures thereof.

In a preferred embodiment of the hybrid two-part dental implant of the present invention said protrusion (15a) or indentation (15b) of the abutment (12), is free or essentially free of any threaded parts.

In a preferred embodiment of the hybrid two-part dental implant of the present invention said prosthetic head (13) of said abutment (12) has a diameter of between 1 and 11 mm, which might vary over the length, and preferably a length of between 2 and 10 mm measured from the contact region (14) to the coronal region of said abutment.

In a preferred embodiment of the hybrid two-part dental implant of the present invention said abutment (12) further comprises a crown or superstructure in one piece.

In a preferred embodiment of the hybrid two-part dental implant of the present invention the dental implant (1) and the abutment (12) are connected to each other with an adhesive.

In a preferred embodiment of the hybrid two-part dental implant of the present invention the screw inserted through the bore (19) is connected with the indentation (4) of the dental implant (1) with an adhesive.

In a preferred embodiment of the hybrid two-part dental implant of the present invention said adhesive is selected from the group consisting of zinc phosphate cement, carboxylate cement, glass ionomer cement, hybrid cement, composite cements, cyanacrylate, and polyacrylate.

In a further aspect the present invention relates to a hybrid three-part dental implant comprising a hybrid two-part dental implant of the present invention and further comprising a crown or superstructure.

In a further aspect the present invention relates to the use of a hybrid two-part dental implant of the present invention or of a hybrid three-part dental implant of the present invention for dental implantation.

In a further aspect the present invention relates to the use of a dental abutment made of a biocompatible synthetic material in combination with a dental implant made of biocompatible ceramics for dental implantation.

In a preferred embodiment of the use of the present invention the biocompatible synthetic material is selected from the group consisting of PC, PA, PI, PEEK, PPSE, EP, UP, PF, MF, CA, PTFE and mixtures thereof.

In a preferred embodiment of the use of the present invention the biocompatible ceramic comprises a ceramic material selected from the group consisting of zirconium oxide, aluminium oxide, yttrium oxide, hafnium oxide, silicon oxide, magnesium oxide, cerium oxide and mixtures thereof.

In a preferred embodiment of the use of the present invention the hybrid two-part dental implant is positioned in the jaw bone of a patient.

### DESCRIPTION OF THE PREFERRED EMBODIMENTS OF THE INVENTION

Before the present invention is described in more detail below, it is to be understood that this invention is not limited to the particular methodology, protocols and materials described herein as these may vary. It is also to be understood that the terminology used herein is for the purpose of describing particular embodiments only, and is not intended to limit the scope of the present invention which will be limited only by the appended claims. Unless defined otherwise, all technical and scientific terms used herein have the same meaning as commonly understood by one of ordinary skill in the art.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Several documents are cited throughout the text of this specification. Each of the documents cited herein (including all patents, patent applications, scientific publications, manufacturer's specifications, instructions, etc.), whether supra or infra, are hereby incorporated by reference in their entirety. Nothing herein is to be construed as an admission that the invention is not entitled to antedate such disclosure by virtue of prior invention.

The term "biocompatible synthetic material" refers to an organic polymer having an E-module >2,000 N/mm², preferably > 2,500 N/mm², preferably > 3,000 N/mm², more preferably > 3,500 N/mm². The biocompatible synthetic material is preferably inert or substantially inert against the environment within the mouth and is non-toxic. Preferred synthetic materials are selected from a group consisting of PC, PA, PI, PEEK, PPSE, EP, UP, PF, MF, CA, PTFE and mixtures thereof. A particular preferred material is PEEK (e.g. PEEK-Optima^{®}, which can be purchased from Invibio, Lancashire, U.K.). To improve the mechanical properties of biocompatible synthetic material, it can be reinforced by introducing other materials, especially fibres from glass, coal, aramide, or metal fibres. The resulting compounds are especially suitable synthetic materials due to their hardness. Examples for especially suitable fibres are aramide fibres (AF), coal fibres (CF) and glass fibres (GF). These can be used individually or mixtures. Preferably, these fibres are embedded in one or more of the following duroplast or thermoplast matrices: epoxide, polyester, phenol, cyanate ester, polyamide, polyimide, polyetheretherketone, polyphenylenesulfide. A number of such compounds are known in the art and comprise especially the group of glass fibre reinforced synthetic materials (GFK), carbon fibre reinforced synthetic material (CFK) and aramide fibre reinforced material (AF) as well as mixtures thereof. All of the above are also comprised in the term "biocompatible synthetic material".

The term "biocompatible ceramics" refers to ceramic materials, which are inert or substantially inert against the environment within the mouth and are non-toxic. Preferably the term refers to ceramics comprising ceramic materials selected from the group consisting of zirconium oxide, aluminium oxide, yttrium oxide, hafnium oxide, silicon oxide, magnesium oxide, cerium oxide and other metal oxides. The pure or mixed ceramic materials can have various crystal forms including, for example, trigonal, hexagonal etc. as can be found, e.g. in ruby and sapphire. Preferably, the ceramic material consists of zirconium oxide, hafnium oxide, yttrium oxide, aluminium oxide and small amounts of other metal oxides. A preferred ceramic material is so called "yttrium-stabilized zirconium" (see e.g. EP 0 218 853 A1 and EP 0 624 360 A1)

As outlined above there is a need in the prior art to provide a stable connection between the implant part and the abutment part of a hybrid two-part dental implant made of biocompatible materials.

Accordingly, in a first aspect the present invention provides a hybrid two-part dental implant comprising:
(i) a dental implant (1) made of biocompatible ceramics comprising an outer threaded part (2) and a contact region (3) for contacting the contact region (14) of an abutment (12), wherein said contact region (3) comprises an indentation (4a) or a protrusion (4b) suitable to insert a protrusion (15a) or to be inserted into an indentation (15b) of said abutment (12), wherein the contact surface of said indentation (4a) or protrusion (4b) with said protrusion (15a) or indentation (15b) is free or essentially free of threaded parts and wherein said contact region (3) further comprises securing means (5) in the form of a multifaced protrusion (6) or indentation (7) preventing rotation of an engaged abutment (12), and
(ii) an abutment (12) made of a biocompatible synthetic material, comprising a prosthetic head (13) and a contact region (14) for contacting said contact region (3) of said dental implant (1), wherein said contact region (14) comprises a protrusion (15a) or indentation (15b), suitable to be inserted into an indentation (4a) or suitable to insert a protrusion (4b) comprised in said contact region (3) of said dental implant (1), wherein said contact region (14) further comprises securing means (16) in the form of a multifaced protrusion (17) or indentation (18) preventing rotation of said abutment (12) with respect to said dental implant (1), if engaged with said securing means (5).

In a preferred embodiment of the first aspect of the present invention the dental implant (1) comprises an indentation (4a) within the contact region (3) and the abutment (12) comprises a protrusion (15a) in the contact region (14).

In a preferred embodiment of the first aspect of the present invention the dental implant (1) comprises a protrusion (4b) within the contact region (3) and the abutment (12) comprises an indentation (15b) in the contact region (14).

In one preferred embodiment the protrusion (15a) or indentation (15b) of the abutment (12) is free or essentially free of any threaded parts.

In another preferred embodiment the abutment (12) the cross-section of the protrusion (15a) or indentation (15b) is selected from the group of cross-sections consisting of round, oval, and multifaced. Preferably, the protrusion (15a) has a length of between 1 mm and 20 mm, e.g. 1, 2, 3, 4, 5, 6, 7, 8, 9, 10, 11, 12, 13, 14, 15, 16, 17, 18, 19, or 20 mm, preferably a length between 2 and 10 mm, more preferably between 3 and 6 mm. The length of the corresponding dental implant is preferably between 1 and 20 mm, e.g. 1, 2, 3, 4, 5, 6, 7, 8, 9, 10, 11, 12, 13, 14, 15, 16, 17, 18, 19 or 20 mm, preferably between 1 and 10 mm, more preferably of between 1 and 7 mm. Alternatively, the indentation (15b) has a length of between 1 mm and 10 mm the length of the corresponding abutment (12) is preferably 1 and 10 mm, e.g. 1, 2, 3, 4, 5, 6, 7, 8, 9, or 10, preferably between 1 and 5 mm, more preferably between 1 and 4 mm. It is preferred that the protrusion (15a) or indentation (15b) does not extend through the entire dental implant (1) and abutment (12), respectively.

In one embodiment of the abutment (12) according to the present invention the protrusion (15a) or indentation (15b) has a diameter of between 0.5 and 6 mm, e.g. 0.5, 1, 2, 3, 4, 5 or 6 mm, preferably between 1 and 4 mm, more preferably between 1 and 2, wherein the diameter might vary over the length of said protrusion (15a) or indentation (15b). Preferably, the form and width of the cross-section does not change over the length of the protrusion (15a) or indentation (15b), however, it may be tapered towards the bottom of the protrusion (15a) or indentation (15b). It is also possible that the cross-section changes over the length between any of above preferred forms of the cross-section as long as this change does not prevent a close contact between the protrusion (15a) and the indentation (4a) of the engaged dental implant (1) or the indentation (15b) and the protrusion (4b) of the engaged dental implant (1).

In a second aspect the present invention provides a hybrid two-part dental implant comprising:
(i) a dental implant (1) made of biocompatible ceramics comprising an outer threaded part (2) and a contact region (3) for contacting the contact region (14) of an abutment (12), wherein said contact region (3) comprises an indentation (4) suitable to insert a screw, wherein the contact surface of said indentation (4) with said screw comprises a threaded part and wherein said contact region (3) further comprises securing means (5) in the form of a multifaced protrusion (6) or indentation (7) preventing rotation of an engaged abutment (12), and
(ii) an abutment (12) made of a biocompatible synthetic material, comprising a prosthetic head (13) and a contact region (14) for contacting the contact region (3) of said dental implant (1) and a bore (19) extending through said prosthetic head and through the contact region (14), suitable to insert a screw into said dental implant (1), wherein said contact region (14) further comprises securing means (16) in the form of a multifaced protrusion (17) or indentation (18) preventing rotation of said abutment (12) with respect to said dental implant (1), if engaged with said securing means (5).

The indention (4) of the hybrid two-part-dental implant according to the second aspect of the present invention is identical or essentially identical to the indention (4a) of the hybrid two-part-dental implant according to the first aspect but for the provision of a threaded part. The threaded part may extend over the entire length of the indentation (4) or may only be present in a fraction of the length of the indentation, e.g. 90%, 80%, 70%, 60%, 50%, 40% or less. Preferably the threaded part is located at the bottom of the indentation (4). The threaded part can have any art known form. The thread can be either right handed or left handed and can have a wide variety of pitches and thread shapes. Preferably the thread lead has a pitch of between 6 and 18 degree, e.g. 6, 7, 8, 9, 10, 11, 12, 13, 14, 15, 16, 17, or 18 degree or is within any range defined by two values of the preferred pitches (α), preferably pitch is between 8 and 15 degree and more preferably about 12 degree. The indentation (4) has a diameter that is slightly larger than the outer diameter of the threaded part of the screw to be inserted. Preferably, the indentation has a diameter of between 0.5 and 4 mm, preferably 0.5, 0.6, 0.7, 0.8, 0.9, 1.0, 1.2, 1.4, 1.6, 1.8, 2.0, 2.2, 2.4, 2.6, 2.8, 3.0, 3.2, 3.4, 3.6, 3.8, 4.0 mm. The diameter has to be sufficient to insert a screw of a diameter capable of providing resistance against lateral forces, which are typically applied to the abutment during use and should not be so large to reduce the stability of the threaded part (2) of the dental implant (1), which requires a sufficient wall thickness of the threaded part (2). The thickness of the ceramic material between the inner diameter of the threaded part (2) and the indentation (4) should be at least 0.5 mm for small dental implants, e.g. dental implants with a diameter of 1.5 to 2 mm and should be at least 0.8 mm for larger diameter dental implants (1). Typically, the relation of the diameter of the indentation (4) to thickness of the wall will be in the range from 1:2 to 2:1.

The bore through the abutment is such that a screw can be inserted through the bore which is capable of engaging the threaded part located in the indention (4) of the dental implant (1). The bore preferably comprises at least two different diameters or a conical region, with the smaller diameter bore being positioned at the apical end of the bore (19). This narrowing of the bore allows the screw head to engage the abutment (12) and prevent movement of the abutment (12) along the longitudinal axis of the hybrid two-part dental implant. Preferably, the smallest diameter of the bore (19) is between 0.5 and 4 mm, preferably 0.5, 0.6, 0.7, 0.8, 0.9, 1.0, 1.2, 1.4, 1.6, 1.8, 2.0, 2.2, 2.4, 2.6, 2.8, 3.0, 3.2, 3.4, 3.6, 3.8, 4.0 mm. It is preferred that the larger diameter is between 0.1 to 2 mm larger than the smaller diameter of the bore (19). The diameter of the smallest bore is preferably slightly larger than the outer diameter of the threaded part of the screw to be inserted.

In a preferred embodiment the hybrid two-part dental implant of the present invention further comprises a screw made of biocompatible ceramics or biocompatible synthetic material. The screw comprises a screw head which is preferably of pan, button, round, truss, flat, or oval shape. The screw head is preferably provided with a slotted, Phillips, Pozidriv, Torx, Hex, Robertson, Tri-Wing or Torq-Set drive. Preferably, the screw is made of a biocompatible synthetic material, preferably selected from the group consisting of PC, PA, PI, PEEK, PPSE, EP, UP, PF, MF, CA, PTFE and mixtures thereof, most preferably of PEEK (e.g. PEEK-Optima^{®}, which can be purchased from Invibio, Lancashire, U.K.) or fibre reinforced variants thereof. While the screw is provided with threads these will only in one embodiment be tightened to the corresponding threads in the indentation (4) in order to provide a secure connection between the abutment (12) and the dental implant (1). In a preferred embodiment the screw inserted through the abutment (12) will be glued to the dental implant (1) to provide a secure connection between the abutment (12) and the dental implant (1). In this embodiment the engaging screw threads primarily serve to increase the contact surface available for the adhesive connecting the screw to the dental implant (1). In either case additional adhesive may be applied to provide adhesion between the contact region (3) and (14). Alternatively a thread-less pin mad of a biocompatible ceramics or biocompatible synthetic material may be inserted through the bore (19) which does not to engage the threads in the indentation (4) and is used to connect the abutment (12) with the dental implant (1) by way of an adhesive.

The term "contact region (3)" as used with respect to the hybrid two-part dental implant of the first and second aspect of the present invention refers to the entire surface of the dental implant (1) that contacts the corresponding contact region (14) of the abutment (12).

The multifaced protrusion or indentation (6 and 18 or 7 and 17) of the securing means (5, 16) of the hybrid two-part dental implant according to both aspects of the present invention are features separate from the indentation (4a, 4, 15b) or protrusion (4b, 15a) within the contact region (3, 14), characterized by a larger diameter, shape and/or shorter length then the indentation (4a, 4, 15b) or protrusion (4b, 15a).

The securing means (5) of the dental implant (1) may also be used for insertion of the dental implant (1) into the bone, i.e. with a "wrench-like" tool that engages the securing means (5). The securing means (5) may have any shape, which if brought into contact with a corresponding securing means (16) of the abutment (12) prevents rotation of the abutment relative to the dental implant along the longitudinal axis of the dental implant. The securing means (5) in the form of a multifaced protrusion (6) or indentation (7) is located in the contact region (3), preferably it is a multifaced protrusion (6) located in the contact region (3), most preferably it is a multifaced protrusion (6) located in the middle of said contact region (3), i.e. centred around the longitudinal axis. This protrusion (6) or indentation (7) is a separate feature within the contact region (3), i.e. the securing means is provided in addition to any indentation (4a, 4) or protrusion (4b) also located in the contact region. The securing means whether it is a protrusion (6) or indention (7) has a larger diameter than any indentation (4a, 4) or protrusion (4b). Thereby the securing means provides an additional interaction surface within the contact region (3) between the abutment (12) and the dental implant (1), which prevents the breaking of either the protrusion (4b) of the dental implant (1) penetrating the indentation (15b) of the abutment, the protrusion of the abutment (15a) penetrating the indentation (4a) of the dental implant (1) or the screw penetrating the indentation (4). Preferably the diameter of the protrusion (6) or indentation (7) of the securing means is 1.5 to 3-fold, preferably 1.6, 1.7, 1.8, 1.9, 2, 2.1, 2.2, 2.3, 2.4, 2.5, 2.6, 2.7, 2.8, 2.9-fold the diameter of the protrusion (4b) or indentation (4a) or may be any range defined by two of the various indicated preferred ratios of the respective diameters.

Preferably the protrusion (6) or indentation (7) has a diameter that is equal or slightly smaller, i.e. more than 70%, preferably more than 75%, more than 80%, more than 85%, more than 90% or more than 95% of the outer diameter (o) of the threaded part (2), i.e. 1.5 to 7 mm, e.g. 1.5, 2, 3, 4, 5, 6 or 7 mm or any range defined by two of this preferred values, more preferably between 2 and 6 mm, most preferably between 2.5 and 5.5 mm.

In a preferred embodiment the securing means of the dental implant (1) are of polygonal shape (8) preferably said polygonal shape (8) has n-faces, whereas "n" can be any number between 1 and 50, e.g. 1, 2, 3, 4, 5, 6, 7, 8, 9, 10, 11, 12, 13, 14, 15, 16, 17, 18, 19, 20, 21, 22, 23, 24,25,26,27,28,29,30,31,32,33,34,35,36,37,38,39,40,41,42,43,44,45,46,47,48,49 or 50, preferably said polygonal shape has 3, 4, 5, 6, 7, 8, 9 or 10 faces, more preferably 4, 5 or 6 faces or any range defined by the various numbers. Preferably the normal vector of the faces of the polygonal shaped protrusion or indentation are perpendicular to the longitudinal axis of the dental implant or the angle between the normal and the longitudinal axis is larger than 80%. The shape of the corresponding securing means of the abutment is determined by the shape of the securing means of the dental implant. Measured from the distal end of the threaded part (2), conical junction (10) or middle part (11) (in case that the dental implant comprises either a conical junction (10) or a conical junction and a middle part (11) at its distal end) the length of the protrusion (6) or the depth of the indentation (7) will typically have a length/depth of 0.5 to 3 mm, preferably 1.0 to 2.0 mm, preferably 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0 or any range defined by these numbers.The multifaced protrusion (6) will generally have a distal (or coronal) surface that is flat or essentially flat and perpendicular to the longitudinal axis of the dental implant. The smaller diameter protrusion (4b) or indentation (4a, 4) will usually be located in the middle of this plane, preferably along the longitudinal axis. Similarly, also the multifaced indentation (7) will preferably have a distal surface that is flat or essentially flat and perpendicular to the longitudinal axis.

The term "contact region (14)" as used with respect to the hybrid two-part dental implant of the first and second aspect of the present invention refers to the entire surface of the abutment (12) that contacts the corresponding contact region (3) of the dental implant (1). The securing means (16) is in the form of a multifaced protrusion (17) or indentation (18) in the contact region (14). Whether the abutment (12) is respectively provided with a protrusion (17) or indentation (18) depends on whether the corresponding dental implant to which the abutment will be attached comprises a multifaced indentation (7) and a protrusion (6), respectively. This multifaced protrusion (17) or indentation (18) is a separate feature within the contact region (14), i.e. the securing means (16) is provided in addition to any indentation (15b), protrusion (15a) or bore (19) also located in the contact region (14). The securing means (16) whether it is a protrusion (17) or indention (18) has a larger diameter than any indentation (15b) protrusion (15a) or bore (19).Thereby the securing means provides an additional interaction surface at the contact region (14) between the abutment (12) and the dental implant (1), which prevents the breaking of either the protrusion (4b) of the dental implant (1) penetrating the indentation (15b) of the abutment (12), the protrusion (15a) of the abutment (12) penetrating the indentation (4a) of the dental implant (1) or of the screw inserted through the bore (19) of the abutment (12) into the dental implant (1). Preferably the diameter of the protrusion (17) or indentation (18) of the securing means is 1.5 to 3-fold, preferably 1.6, 1.7, 1.8, 1.9, 2, 2.1, 2.2, 2.3, 2.4, 2.5, 2.6, 2.7, 2.8, 2.9-fold the diameter of the protrusion (4b) or indentation (4a, 4) or any range defined by two of the various indicated preferred ratios of the respective diameters.

Preferably the protrusion (17) or indentation (18) has a diameter that is equal or slightly smaller, i.e. more than 70%, preferably more than 75%, more than 80%, more than 85%, more than 90% or more than 95% of the outer diameter (o) of the threaded part (2), i.e. 1.5 to 7 mm, e.g. 1.5, 2, 3, 4, 5, 6 or 7 mm or any range defined by two of this preferred values, more preferably between 2 and 6 mm, most preferably between 2.5 and 5.5 mm.

More preferably, said multifaced protrusion (17) or indentation (18) is of a polygonal shape (8), wherein said polygonal shape (8) has n-faces, whereas "n" can be any number between 1 and 50, e.g. 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37 38, 39, 40, 41, 42, 43, 44, 45, 46, 47, 48, 49 or 50, preferably said polygonal shape has 3, 4, 5, 6, 7, 8, 9 or 10 faces, more preferably 4, 5 or 6 faces. Above further preferred embodiments of the protrusions (6) and indentation (7) of the dental implant have been described. It is understood by someone of skill that the design of the securing means (16) of the abutment (12) is determined by the size and shape of the securing means (5) of the dental implant. Accordingly, the securing means (16) of the abutment (12) may have all the shapes determined by the respectively indicated preferred securing means of the dental implant (1).

In a preferred embodiment of the hybrid two-part dental implant of the first and second aspect of the present invention the surface area of the outer threaded part (2) of the dental implant (1) has a micro-roughness of between 2 micron and 50 micron, e.g. 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37 38, 39, 40, 41, 42, 43, 44, 45, 46, 47, 48, 49 or 50, preferably between 4 micron and 20 micron to facilitate the ingrowth of osteoblasts and the stable attachment of bone tissue to the implant. It is well known in the art how to measure surface roughness, for example with an alphastep 250 profilometer. The micro-roughness provides an excellent contact surface for osteoblasts, which attach to the dental implant and faster "osseo-integration", which is a prerequisite for permanent adherence to the contacting bone surface. Therefore a suitable micro-roughness of the implant surface provides a mechanical interlocking between the bone and the implant. Preferably the surface area having above indicated micro-roughness covers at least 20 %, more preferably at least 30 %, more preferably at least 40 %, more preferably at least 50 %, more preferably at least 60 %, more preferably at least 70 %, more preferably at least 80 %, more preferably at least 90 % of the surface area of the outer threaded part (2).

The required surface roughness can be achieved by a variety of art known methods including without limitation blasting with aluminium oxide after the implant has been sintered or the roughness can already be achieved through the design of the mould used for forming the ceramic green body during injection moulding or isopressing or the roughness can be achieved through coating with a biocompatible material e.g. ceramic or any biomaterial which could be suitable to achieve a better implant to bone contact or by surface manipulation through a laser based technique.

In a preferred embodiment of the hybrid two-part dental implant of the first and second aspect of the present invention the outer threaded part (2) of the dental implant (1) has a diameter and length suitable to be inserted into the mandibular or maxillary bone. Ideally all roots of teeth have been removed prior to drilling the hole into which the dental implant (1) is placed. However, it is also possible to drill a hole into a bone still comprising all or parts of a natural root. The dental implant (1) is ultimately stabilized and securely attached to the bone by the ingrowth of osteoblasts into the dental implant. The outer threaded part (2) is additionally provided for the purpose of mechanical stabilizing the dental implant in the bone.

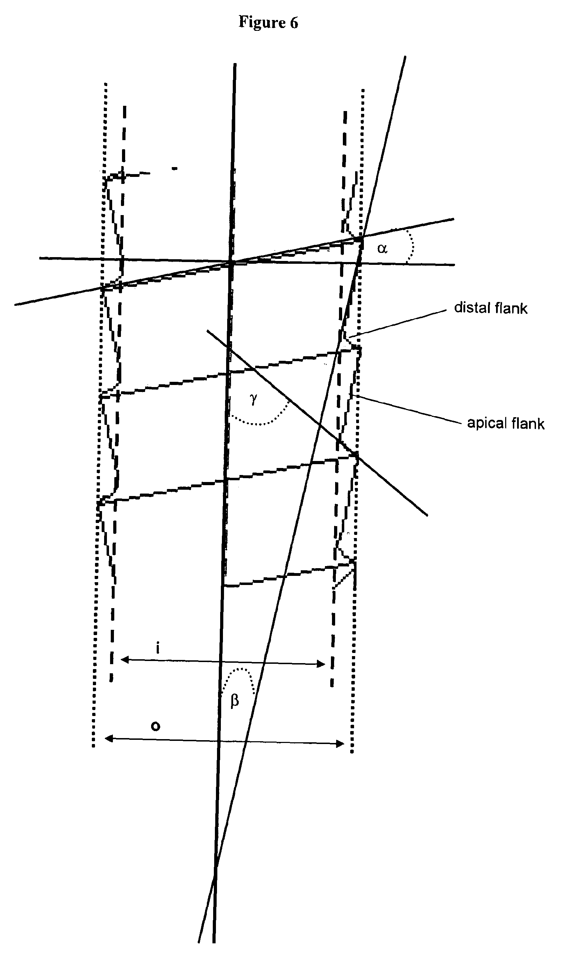

The threaded part (2) can have any art known form. The thread can be either right handed or left handed and can have a wide variety of pitches and thread shapes. Preferably the thread lead has a pitch (α) of between 6 and 18 degree, e.g. 6, 7, 8, 9, 10, 11, 12, 13, 14, 15, 16, 17, or 18 degree or is within any range defined by two values of the preferred pitches (α), preferably pitch (α) is between 8 and 15 degree and more preferably about 12 degree. As is apparent from Fig. 6 the pitch of the thread lead is determined as the projection of the thread on the screw cross section. The distance between one turn of the thread to the next turn is preferably between 1 and 2 mm, more preferably between 1.2 and 1.8 mm, more preferably between 1.4 and 1.6 mm and most preferably about 1.5 mm.

In a preferred embodiment there is a difference between the core drilling (the "inner diameter (i)") and the edge of each turn of the thread (the "outer diameter (o)"), wherein said difference is preferably of between 0.1 and 3.0 mm, preferably 0.5 to 1.5 mm, more preferably about 1 mm. This difference is also referred to as the "depth of the thread". The respective difference depends in part on the respective outer diameter (o). It is preferred that, that the inner diameter (i) is 10 to 20% smaller than the outer diameter (o).

In a preferred embodiment of the hybrid two-part dental implant of the first and second aspect of the present invention the thread-profile of said outer threaded part (2) of said dental implant (1) comprises an apical flank and a distal flank, wherein an acute angle (β) between the apical flank and the longitudinal axis is smaller than an acute angle (γ) between the distal flank and the longitudinal axis. This particular thread design leads to a secure attachment of the dental implant almost immediately after insertion of the dental implant (1) and, thus, provides reduced healing times, i.e. the abutment (12) can already be attached to the dental implant (1) after only a few days of healing.

It is further preferred, that the distal flank immediately contacts the apical flank, i.e. without an intervening section, which is, e.g. parallel to the longitudinal axis. The contact point between the distal and the apical flank can be rounded. Preferably, the faces of the apical and/or distal flank are essentially plane, preferably plane, over the whole length of the flank, e.g. at least over a length of 80%, 85%, 90%, 91%, 92%, 93%, 94%, or 95%, 96%, 97% or 98% of the entire length of the flank. The length of the flank is the length of the surface of the flank between the points, where the flank reaches the inner and outer diameter, respectively. Preferably the flanks comprise a small section at each end, i.e. at the connection point with the next flank, which is not plane but rounded. The length of this section preferably varies between 1% and 15%, e.g. 1%, 2%, 3%, 4%, 5%, 6%, 7%, 8%, 9%, 10%, 11%, 12%, 13%, 14%, 15% of the entire length of a given flank, or is within any range defined by two values of the preferred length of this section. Preferably, the acute angle (β) between the apical flank and the longitudinal axis is smaller than the acute angle (γ) between the distal flank and the longitudinal axis.

In a preferred embodiment the apical flank has an acute angle (β) to the longitudinal axis of between 5 and 20 degree, e.g. 5, 6, 7, 8, 9, 10, 11, 12, 13, 14, 15, 16, 17, 18, 19 or 20 degree or any range defined by two values of the preferred acute angles (β), preferably of between 8 and 15 degree and more preferably about 10 degree. In addition, the distal flank has an acute angle (γ) to the longitudinal axis of between 40 and 60 degree, e.g. 40, 41, 42, 43, 44, 45, 46, 47, 48, 49, 50, 51, 52, 53, 54, 55, 56, 57, 58, 59, or 60 degree or any range defined by two values of the preferred acute angles (γ), preferably of between 45 and 55 degree and more preferably about 50 degree. Thus, a kind of skewback in the bone is observed.

It is preferred that the threaded part (2) has the same thread parameters, e.g. pitch of the thread lead, depth of the thread and thread profile (angle (β) and angle (γ), length of the plane section, form of the contact points of the apical and distal flank) over the entire length. Accordingly, it is preferred that the dental implant comprises only one thread type.

In a preferred embodiment the apical peak of the threaded part is preferably conically formed meeting preferably in a blunt bottom. The cone at the apical peak preferably has a radius of between 1.5 and 2.5 mm, e.g. 1.1, 1.2, 1.3, 1.4, 1.5, 1.6, 1.7, 1.8, 1.9, 2.0, 2.1, 2.2, 2.3, 2.4, or 2.5 or any range defined by two values of the preferred radiuses, preferably 2.0 mm.

In a preferred embodiment the outer threaded part (2) of the dental implant (1) has a length of between 2 and 20 mm, e.g. 2, 3, 4, 5, 6, 7, 8, 9, 10, 11, 12, 13, 14, 15, 16, 17, 18, 19, or 20 mm or the length is within any range defined by two values of the preferred lengths, preferably between 8 and 15 mm.

The outer diameter of the threaded part (2) is preferably between 1.5 and 7 mm, e.g. 1.5, 2, 3, 4, 5, 6 or 7 mm or the diameter is within any range defined by two values of the preferred diameters, more preferably between 2 and 6 mm, most preferably between 2.5 and 5.5 mm.

It is particularly preferred that the dental implant (1) has a length of between 2 and 20 mm, and preferably an outer diameter of between 1 and 7 mm, and more preferably a length of between 8 and 15 mm and an outer diameter of between 2.5 and 5.5 mm.

The outer threaded part (2) will in most embodiments extend over the entire length of the part of the dental implant (1) inserted into the bone. These threads are preferably present on the cylindrical sections of the dental implant (1), while a tip, which might be attached at the apical end of the dental implant, will preferably not comprise threads. Such a tip can have any shape as long as its diameter does not extend over the diameter of the outer threaded part (2) to which it is attached, i.e. the outer diameter of the outer threaded part. Preferably the diameter of the tip does not extend beyond the inside diameter of the outer threaded part (2). The tip preferably has a round, pointed or blunt shape. As it is not always required that the entire part of the detnal implant (1) inserted into the bone is threaded, the dental implant (1) in some embodiments may comprise further parts inserted into the bone, which are not threaded. These one or more further parts are preferably located towards the apical end of the dental implant and/or towards the distal end, preferably towards the transgingival part (9). Preferably any further part which is not threaded and is inserted into the bone is also provided with a rough surface as defined above, to facilitate osseo-integration.

In a preferred embodiment the dental implant (1) further comprises in one piece a transgingival part (9). The transgingival part is located towards the distal part of the dental implant (1) and extends over the bone tissue, but will in most embodiments not extend over the gingival tissue of the patient. Accordingly, it will be possible in most embodiments to close the gingival flap after implantation of the dental implant to allow undisturbed ingrowth of the dental implant.

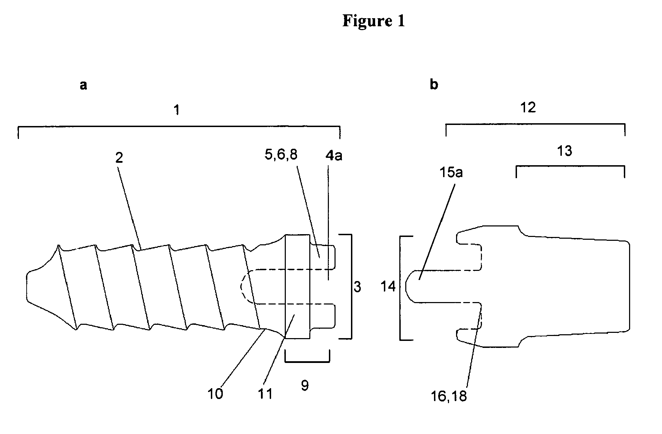

In another preferred embodiment the contact region (3) of the dental implant (1) is comprise in the transgingival part (9) of the dental implant (1), i.e. the abutment contacts the transgingival part (9) of the dental implant (1) (see, e.g. Fig. 1).

In a preferred embodiment the transgingival part (9) has a total length of between 1 to 6 mm, e.g. 1, 2, 3, 4, 5, or 6 mm. A preferred diameter is between 2 to 9 mm, e.g. 2, 3, 4, 5, 6, 7, 8, or 9 mm. The difference of the diameter of the transgingival part and the outer diameter of the threaded part (2) is preferably in the range of 0.1 to 2 mm, more preferably 0.3 to 1.0 mm. In one embodiment the diameter of the transgingival part (9) can change over the length of the transgingival part (9) to form, e.g. securing means (5).

In one preferred embodiment the dental implant (1) comprises the threaded part (2), and a transgingival part (9), comprising a middle part (11), and the contact region (3). The middle part (11) preferably has a cylindrical shape and a length of between 0.1 to 3 mm, e.g. 0.1, 1, 2 or 3 mm, preferably of between 0.2 and 1.5 mm, more preferably about 1 mm. Preferably the diameter of the middle part (11) is slightly larger than the diameter of the threaded part, e.g. preferably by 0.1 to 1.5 mm.

In another preferred embodiment said transgingival part (9) (with or without middle part (11)) is connected to the outer threaded part (2) via a conical junction (10), which preferably does not extend over the bone. Said conical junction (10) preferably has an angle towards the contact region of between 1 and 7 degree, e.g. 1, 2, 3, 4, 5, 6 or 7 degree, preferably of between 2 and 5 degree and a length of between 0.3 to 3 mm, e.g. 0.3, 1, 2 or 3 mm, preferably of between 0.5 and 1.5 mm, more preferably about 1 mm.

In another preferred embodiment the diameter of said contact region (3) is smaller than the diameter of the middle part (11), wherein the diameter of said middle part (11) is larger than the diameter of the threaded part (2).

In one preferred embodiment of the dental implant (1) according to the present invention a surface of said transgingival part (9) has a micro-roughness of less than 2 micron, more preferably of less than 1 micron.

In a further preferred embodiment the cross section of said indentation (4a) or protrusion (4b) comprised in the contact region (3) of the dental implant (1) is selected from the group of cross sections comprising round, oval and multifaced.

In a preferred embodiment of the hybrid two-part dental implant according to the first and second aspect of the invention the indentation (4a, 4) of the dental implant (1) has a length of between 1 and 19 mm, e.g. 1, 2, 3, 4, 5, 6, 7, 8, 9, 10, 11, 12, 13, 14, 15, 16, 17, 18, or 19 mm, preferably of between 1 and 10 mm, more preferably of between 1 and 7 mm. Preferably, said indentation (4a, 4) extends or essentially extends throughout the length of the dental implant (1), preferably without protruding from the apical part of the dental implant, i.e. preferably the dental implant does not comprise a hole at the apical part. The respective maximal length of the indentation (4a, 4) is determined by the size of the threaded part of the dental implant.

In one embodiment the protrusion (4b) of the dental implant (1) has a length of between 1 and 10 mm, e.g. 1, 2, 3, 4, 5, 6, 7, 8, 9, or 10 mm, preferably of between 1 and 8 mm, more preferably of between 1 and 7 mm, most preferably of between 1 and 4 mm.

The length of the indentation (4a, 4) or the protrusion (4b) is measured from the distal end of the securing means (5), e.g. the plane or essentially plane surface. If the dental implant (1) comprises a multifaced indentation (7) as securing means (5) the length of the indention (4a, 4) or protrusion (4b) is measured from the distal end of the indentation, e.g. the plane or essentially plane surface.

The respective length of the protrusion (4b) and indentation (4a) is preferably chosen in such that once the protrusion (4b) is engaged with the indentation of the abutment (15b) or the indentation (4a) is engaged with the protrusion of the abutment (15a) that a space of 0.1 to 2.0 mm length remains between the end of the protrusion (4b, 15a) and the bottom of the indentation (4a, 15b). This space can, e.g. hold excess adhesive applied to the dental implant or the abutment.

Alternatively, the length of the indentation (4) is preferably chosen in such that once the screw is inserted through the bore (19) of the abutment (12) and is engaged with the threads in the indentation (4) of the dental implant (1) that a space of 0.1 to 2.0 mm length remains between the end of the screw and the bottom of the indentation (4). This space can, e.g. hold excess adhesive applied to the dental implant or the abutment.

In another preferred embodiment the indentation (4a) or protrusion (4b) of the dental implant (1) has a diameter of between 0.5 and 6 mm, e.g. 0.5, 1, 2, 3, 4, 5 or 6 mm, preferably of between 1 and 4 mm, more preferably between 1 and 2, wherein the diameter might vary over the length of said indentation (4a) or protrusion (4b). Preferably, the form and width of the cross-section does not change over the length of the indentation (4a) or protrusion (4b), however, it may also be tapered towards the bottom of the indentation (4a) or protrusion (4b). It is also possible that the cross section changes over the length between any of above preferred forms of the cross section as long as this change does not prevent the close contact between said indentation (4a) or protrusion (4b) and said protrusion (15a) or indentation (15b) of the engaged abutment (12). The respective maximal diameter of the indentation (4a) or protrusion (4b) is determined by the inner diameter of the threaded part in case of the indentation (4a) or the outer diameter of the abutment (12) in case of the protrusion (4b). The diameter has to be sufficient to provide resistance against lateral forces, which are typically applied to the abutment during use and should not be so large to reduce the stability of either the threaded part or the abutment part. A sufficient wall thickness of the threaded part, i.e. the thickness of the ceramic material between the inner diameter of the threaded part (2) and the indentation (4a) or the thickness of the ceramic material between the outer diameter of the abutment (12) and the protrusion (4b) extending into the abutment is required. The wall thickness should be at least 0.5 mm for small dental implants, e.g. with a diameter of 1.5 to 2 mm and should be at least 0.8 mm for larger diameter implants. Typically, the relation of the diameter of the indentation (4a) to thickness of the wall will be in the range from 1:2 to 2:1.

In a preferred embodiment of the hybrid two-part dental implant according to the first and second aspect of the invention the biocompatible ceramics of the dental implant (1) comprises a ceramic material selected from the group consisting of zirconium oxide, aluminium oxide, yttrium oxide, hafnium oxide, silicon oxide, magnesium oxide, cerium oxide and other metal oxides. The pure or mixed ceramic materials can have various crystal forms including, for example, trigonal, hexagonal etc. as can be found, e.g. in ruby and sapphire. Preferably, the ceramic material consist of zirconium oxide, hafnium oxide, yttrium oxide, aluminium oxide and other metal oxides.

In a preferred embodiment, 90 to 99,9% of the ceramic composition comprises zirconium oxide, yttrium oxide and hafnium oxide and 0.01% to 10% aluminium oxide and other metal oxides, preferably 95 to 99,9% of the ceramic composition comprises zirconium oxide, yttrium oxide and hafnium oxide and 0.01 to 5% aluminium oxide and other metal oxides, more preferably 98 to 99,9 % of the ceramic composition comprises zirconium oxide, yttrium oxide and hafnium oxide and 0.01 to 2 % aluminium oxide and other metal oxides, more preferably 99 to 99,9% of the ceramic composition comprises zirconium oxide, yttrium oxide and hafnium oxide and 0.01 to 1 % aluminium oxide and other metal oxides, e.g. 99.72% of the ceramic composition will be composed of zirconium oxide, yttrium oxide and hafnium oxide.

In a preferred embodiment the ceramic composition comprises 88 to 95 % by weight of zirconium oxide, 3 to 7% by weight yttrium oxide, 1 to 4% by weight of hafnium oxide, 0.1 to 1% by weight aluminium oxide and 0.01 to 0.5% of other metal oxides, preferably the ceramic composition comprises 90 to 94% by weight of zirconium oxide, 4 to 6% by weight yttrium oxide, 1.5 to 2.5% by weight of hafnium oxide, 0.2 to 0.5% by weight aluminium oxide and 0.02% to 0.2 of other metal oxides, more preferably the ceramic composition comprises 92 to 93% by weight of zirconium oxide, 5 to 6% by weight yttrium oxide, 2 to 3% by weight of hafnium oxide, 0.2 to 0.3 % by weight aluminium oxide and 0.02 to 0.05% of other metal oxides, e.g. 92.61% by weight of zirconium oxide, 5.08% by weight yttrium oxide, 2.03% by weight of hafnium oxide, 0.254% by weight aluminium oxide and 0.036% of other metal oxides.

In a preferred embodiment the biocompatible synthetic material used to make the abutment (12) and, in a preferred embodiment, the screw is an organic polymer having an E-module >2,000 N/mm², preferably > 2,500 N/mm², preferably > 3,000 N/mm², more preferably > 3,500 N/mm². Preferred synthetic materials having the indicated E-module are selected from a group consisting of PC, PA, PI, PEEK, PPSE, EP, UP, PF, MF, CA, PTFE and mixtures thereof. A particular preferred material is PEEK (e.g. PEEK-Optima^{®}, which can be purchased from Invibio, Lancashire, U.K.). To improve the mechanical properties of biocompatible synthetic material, it can be reinforced by introducing other materials, especially fibres from glass, coal, aramide, or metal fibres. The resulting compounds are especially suitable synthetic materials due to their hardness. Examples for especially suitable fibres are aramide fibres (AF), coal fibres (CF) and glass fibres (GF). These can be used individually or mixtures. Preferably, these fibres are embedded in one or more of the following duroplast or thermoplast matrices: epoxide, polyester, phenol, cyanate ester, polyamide, polyimide, polyetheretherketone, polyphenylenesulfide. A number of such compounds are known in the art and comprise especially the group of glass fibre reinforced synthetic materials (GFK), carbon fibre reinforced synthetic material (CFK) and aramide fibre reinforced material (AF) as well as mixtures thereof.

In a preferred embodiment of the hybrid two-part dental implant of the present invention the prosthetic head (13) of the abutment (12) has a diameter in the range of 2.0 to 11.0 mm, more preferably in the range of 2.5 to 8.0 mm, even more preferably in the range of 3.0 to 7.0 mm and most preferably in the range of about 3.5 to about 5.8 mm, which might vary over the length. Preferably, the prosthetic head has a length of between 2 and 10 mm, e.g. 1, 2, 3, 4, 5, 6, 7, 8, 9, or 10 mm, preferably of between 3 and 5 mm, preferably of between 2 and 4 mm, measured from the contact region (14) to the coronal region of said abutment (12). The prosthetic head (13) may have a rounded, cylindrical or conical shape.

Post-processing steps, e.g. grinding of ceramic prosthetic heads, is often accompanied with an impairment of the prosthetic head and, therefore, the ability to process the biocompatible synthetic material of the prosthetic head (13) provides a significant advantage to the hybrid two-part dental implants of the present invention. While the teeth between two patients do not markedly vary in their length there is a large variation laterally between similar teeth of two persons. Thus, a post-processing step is always necessary in cases when the dental implant has a width, which given the respective lateral space available will not allow the attachment of, e.g. a crown or superstructure.

In a further preferred embodiment the present invention provides a set of abutments varying in width of the prosthetic head (13). The dentist will then be capable to select one abutment with a width suitable to attach, e.g. a crown or superstructure, or with a size suitable to fill the gap. Such a set of abutments comprises at least 2 abutments with prosthetic heads with different width and optionally corresponding dental implants (1). Preferably, the two widths are within above ranges and preferred ranges. A particular preferred set comprises 3, 4, 5, 6, 7, 8, 9, 10, 11, 12, 13, 14, 15, 16, 17, 18, 19 or 20 abutments each having a prosthetic head (13) with different diameters, preferably equally distributed in the range of 2.0 to 11.0 mm, more preferably in the range of 2.5 to 8.0 mm, even more preferably in the range of 3.0 to 7.0 mm and most preferably in the range of about 3.5 to about 5.8 mm.

In another preferred embodiment the prosthetic head (13) is of conical shape. In this embodiment it has above indicated preferred widths at its base and is tapered to the top. The tapering is preferably with an angle of between 1° to 15°, e.g. 1°, 2°, 3°, 4°, 5°, 6°, 7°, 8°, 9°, 10°, 11°, 12°, 13°, 14°, or 15°. This tapering facilitates the attachment of crowns or superstructures and/or the scanning of the prosthetic head once the abutment of the present invention has been attached to the dental implant of the present invention. Such a scan can then be used, e.g. to manufacture the crown or superstructure to be attached to the prosthetic head, e.g. by CAD/CAM devices or by a dental technician, in such a way that it on one hand fits exactly to the protruding prosthetic head (13) and on the other hand will be positioned correctly with respect to the surrounding teethes.

In one preferred embodiment the abutment (12) is wider in diameter than the engaged dental implant (1) and has a conical shape towards the coronal end, with an angle of between 1 and 10 degree, e.g. 1, 2, 3, 4, 5, 6, 7, 8, 9, or 10, preferably of between 2 and 5, more preferably 3 degree with respect to the longitudinal axis of the abutment (12).

In a preferred embodiment of the hybrid two-part dental implant according to the first aspect of the present invention said abutment (12) further comprises a crown or superstructure in one piece. Preferably, the crown or superstructure which is separately manufactured has been sintered together with the abutment to form one piece.

In a preferred embodiment the dental implant (1) and the abutment (12) part of the hybrid two-part dental implant according to the present invention are adhered to each other by an adhesive (also termed cement). A large number of suitable adhesives are known in the art of dentistry suitable to connect two parts of, e.g. a dental implant. Preferably the adhesive is selected from the group of adhesives comprise without limitation: zinc phosphate cements, carboxylate cements, glass ionomer cements, hybrid cements, composite cements, cyanacrylate adhesives, and polyacrylate adhesives. Such an adhesive may be applied only to the indentation (4a) and protrusion (15a), the protrusion (4b) and the indentation (15b) or the indentation (4) and the screw. Additionally, the remaining securing means (5, 16) and/or the remaining contact region (3) and (14) may also be used as adhesion surface.

In a preferred embodiment the screw inserted into the indentation (4) does not serve the purpose of securely engaging the dental implant (1) and the abutment (12) but only providea a preliminary fixation of the abutment, while the permanent stability is provided by an adhesive applied to the screw and, in a preferred embodiment, also to the securing means (5, 16) and/or the remaining contact surface (3, 14). Thus, in a preferred embodiment of the hybrid two-part dental implant of the present invention the screw inserted through the bore (19) is connected with the indentation (4) of the dental implant (1) with an adhesive.

In a further aspect the present invention relates to a hybrid three-part dental implant comprising a hybrid two-part dental implant of both aspects of the present invention and further comprising a crown or superstructure.

In a further aspect the present invention relates to the use of hybrid two-part dental implant according to both aspects of the present invention or of a hybrid three-part dental implant of the present invention for dental implantation.

During implantation of the dental implant (1) according to the second aspect of the present invention the threaded indentation (4) serves at least three purposes. Initially, the dental implant (1) is inserted into the jaw bone. Then the gingival tissue is closed and the dental implant is allowed to heal into the bone, typically for 3 to 6 months. During this period the indentation (4) is protected from ingrowth of tissue by a cap or, preferably, a capped screw inserted into the indentation (4). Then the gingival tissue is re-opened and the original abutment (12) or an abutment just used for this purpose is temporary affixed to the dental implant (1) with a screw to facilitate the preparation of casts of the hybrid two-part dental implant with, e.g. a standard impression spoon directly from the original abutment part (12). Typically, the abutment (12) is then replaced with a healing abutment that is inserted to allow better healing of the soft tissue, preferably for 5 to 20 days. The healing abutment is also temporary affixed to the dental implant (1) with a screw. During this period the crown or superstructure is prepared on the basis of the cast. Finally, the abutment (12) will again be affixed to the dental implant with the screw. In a preferred embodiment as outlined above the screw will only support the adhesive applied to the screw and the indentation (4). Thus, in a further aspect present invention also relates to a method of implantation as outlined above.

In a further aspect the present invention concerns a method of implanting a hybrid two-part dental implant of both aspects of the present invention, preferably wherein the threaded-profile of the outer threaded part (2) comprises an apical flank and a distal flank, more preferably the acute angle (β) between the apical flank and the longitudinal axis is smaller than the acute angle (γ) between the distal flank and the longitudinal axis, wherein the dental implant (1) is implanted into the bone and the abutment (12) is attached to the dental implant after 3 months, 2 months, 4 weeks, 3 weeks, 2 weeks, 7, 6, 5, 4, 3, 2, 1 days after the implantation of the dental implant.

In a particular preferred embodiment the abutment is attached immediately, e.g. within a period of 0 to 3 hours after implantation of the dental implant.

It has been surprisingly found that the combination of an abutment of biocompatible synthetic material and of a dental implant made of biocompatible ceramics is feasible. Thus, in a further aspect the present invention relates to the use of a dental abutment made of a biocompatible synthetic material in combination with a dental implant made of biocompatible ceramics for dental implantation.

In a preferred embodiment of the use of the present invention the biocompatible synthetic material is the biocompatible synthetic material as defined above. Preferably selected from the group consisting of polycarbonate (PC, PA, PI, PEEK, PPSE, EP, UP, PF, MF, CA, PTFE and mixtures thereof. A particular preferred material is PEEK (e.g. PEEK-Optima^{®}, which can be purchased from Invibio, Lancashire, U.K.).

In a preferred embodiment of the use of the present invention the biocompatible ceramic comprises a ceramic material selected from the group consisting of zirconium oxide, aluminium oxide, yttrium oxide, hafnium oxide, silicon oxide, magnesium oxide, cerium oxide and mixtures thereof.

In a preferred embodiment of the use of the present invention the hybrid two-part dental implant is positioned in the jaw bone of a patient.

### BRIEF DESCRIPTION OF THE DRAWINGS

**Figure 1****:** Shows a hybrid two-part dental implant according to the first aspect of the present invention. The dental implant (1) is depicted in panel a) comprising a outer threaded part (2), and a transgingival part (9) comprising a contact region (3) and a middle part (11) and further comprising within the contact region an indentation (4a) and securing means (5) having a polygonal shape (8) in form of a multifaced protrusion (6); and the abutment (12) is depicted in panel b) comprising a prosthetic head (13) and a contact region (14) and within the contact region (14) a protrusion (15a) and securing means (16) in form of a multifaced indentation (18).

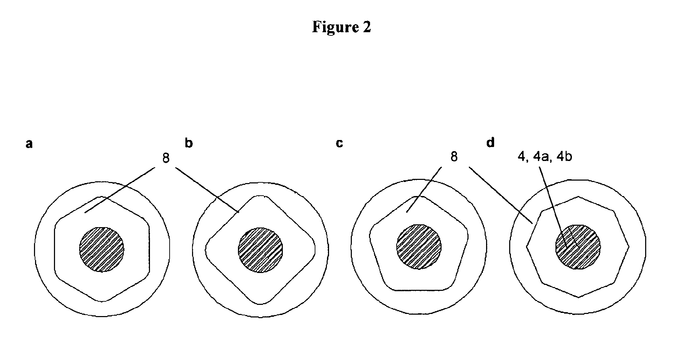

**Figure 2****:** Shows a top view of the dental implant (1), wherein the securing means (5) are shown in form of a multifaced protrusion (6) or indentation (7), having a polygonal shape (8) with 6 faces (a), 4 faces (b), 5 faces (c) and 8 faces (d).

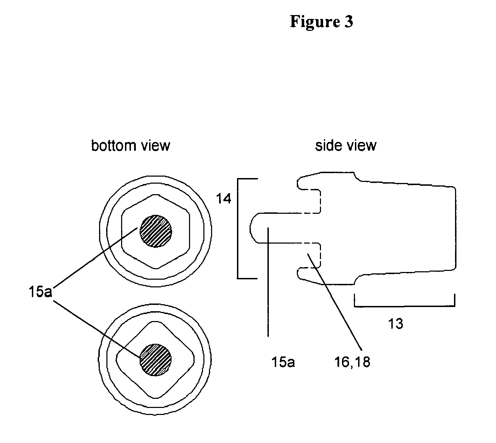

**Figure 3****:** Shows a bottom view and a side view of the abutment (12) having a protrusion (15a)

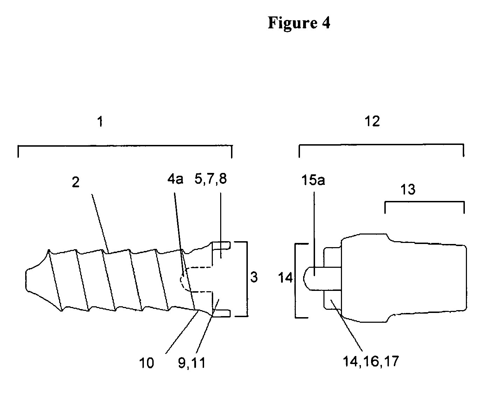

**Figure 4****:** Shows a hybrid two-part medicinal device: Panel a) depicts a dental implant (1) comprising a outer threaded part (2), a contact region (3), a transgingival part (9) and a middle part (11) and within the contact region (3) an indentation (4a) and a securing means (5) in from of a multifaced indentation (7). Panel b) depicts an abutment (12) comprising a prosthetic head (13) and a contact region (14) and within the contact region (14) a protrusion (15a) and securing means (16) in form of a multifaced protrusion (17).

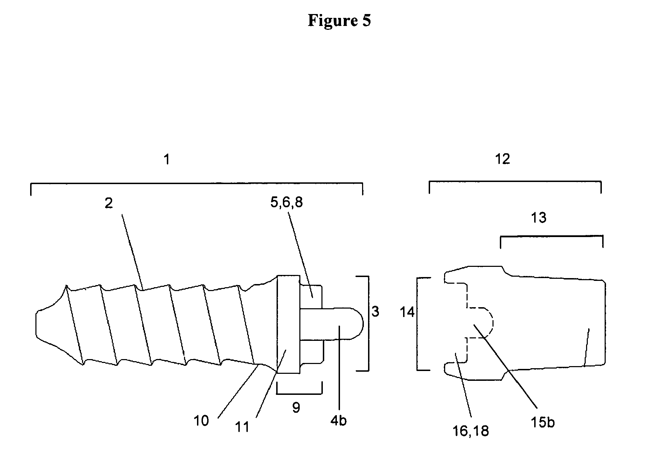

**Figure 5****:** Shows a hybrid two-part medicinal device: Panel a) depicts a dental implant (1) comprising a outer threaded part (2) and a transgingival part (9) comprising a contact region (3), and within the contact region (3) a protrusion (4b) and securing means (5) in from of a multifaced protrusion (6). Panel b) depicts an abutment (12) comprising a prosthetic head (13) and a contact region (14) and within the contact region (14) an indentation (15b) and securing means (16) in form of a multifaced indentation (18).
**Figure 6****:** Shows a section of the threaded part (2) of the dental implant (1) of one preferred embodiment, wherein the shaft is tapered towards apical. The angle α depicts the pitch of the threaded part, (a) the apical length of the shaft and (b) the distal length of the shaft.

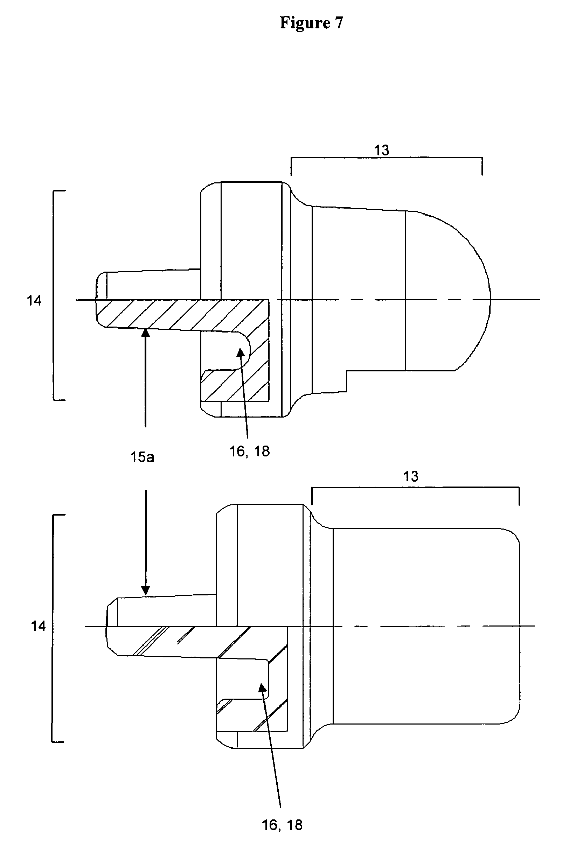

**Figure 7****:** Shows a side view of two different abutments (12) according to the first aspect of the hybrid two-part dental implant of the present invention. In the contact region (14) partial sectional views of the abutments (12) are shown.

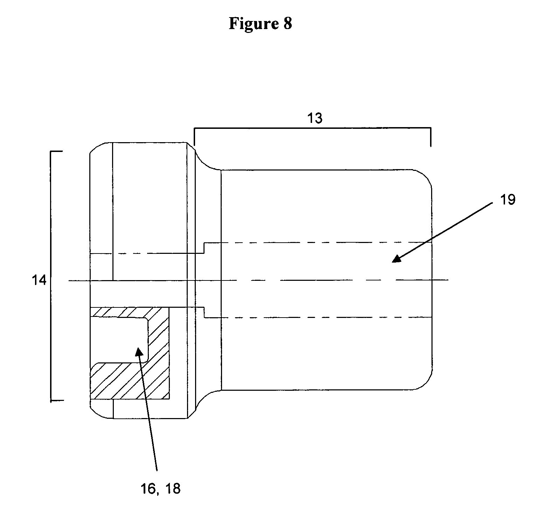

**Figure 8****:** Shows a sectional view of an abutment (12) according to the second aspect of the hybrid two-part dental implant of the present invention comprising a bore (19) with two different diameters. In the contact region (14) a partial sectional view of the abutment (12) is shown.

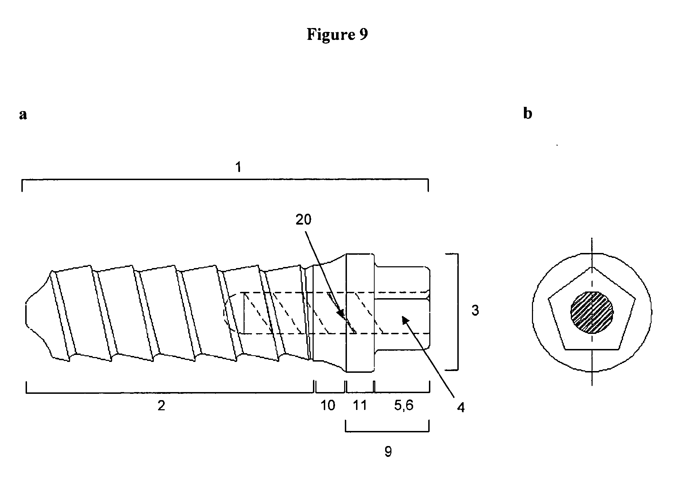

**Figure 9****:** Shows a dental implant (1) which is part of a hybrid two-part dental implant according to the second aspect of the present invention. Panel a) depicts a side view and a partial sectional view of the dental implant and panel b) depicts a top view.

### LISTING OF REFERENCE NUMERALS

- 1: dental implant
- 2: outer threaded part (of the dental implant)
- 3: contact region (of the dental implant)
- 4: indentation (of the dental implant according to the second aspect of the invention)
- 4a: indentation (of the dental implant according to the first aspect of the invention)
- 4b: protrusion (of the dental implant according to the first aspect of the invention)
- 5: securing means (of the dental implant)
- 6: multifaced protrusion (of the dental implant)
- 7: multifaced indentation (of the dental implant)
- 8: polygonal shape (of the dental implant)
- 9: transgingival part (of the dental implant)
- 10: conical junction (of the dental implant)
- 11: middle part (of the dental implant)
- 12: abutment
- 13: prosthetic head (of the abutment)
- 14: contact region (of the abutment)
- 15a: protrusion (of the abutment)
- 15b: indentation (of the abutment)
- 16: securing means (of the abutment)
- 17: multifaced protrusion (of the abutment)
- 18: multifaced indentation (of the abutment)
- 19: bore through the abutment
- 20: thread in the indentation

## Claims

1. A hybrid two-part dental implant comprising:
(i) a dental implant (1) made of biocompatible ceramics comprising an outer threaded part (2) and a contact region (3) for contacting the contact region (14) of an abutment (12), wherein said contact region (3) comprises an indentation (4a) or protrusion (4b) suitable to insert a protrusion (15a) or to be inserted into an indentation (15b) of said abutment (12), wherein the contact surface of said indentation (4a) or protrusion (4b) with said protrusion (15a) or indentation (15b) is essentially free of threaded parts and wherein said contact region (3) further comprises securing means (5) in the form of a multifaced protrusion (6) or indentation (7) preventing rotation of an engaged abutment (12), and
(ii) an abutment (12) made of a biocompatible synthetic material, comprising a prosthetic head (13) and a contact region (14) for contacting said contact region (3) of said dental implant (1), wherein said contact region (14) comprises a protrusion (15a) or indentation (15b), suitable to be inserted into an indentation (4a) or suitable to insert a protrusion (4b) comprised in said contact region (3) of said dental implant (1), wherein said contact region (14) further comprises securing means (16) in the form of a multifaced protrusion (17) or indentation (18) preventing rotation of said abutment (12) with respect to said dental implant (1), if engaged with said securing means (5).

2. A hybrid two-part dental implant comprising:
(i) a dental implant (1) made of biocompatible ceramics comprising an outer threaded part (2) and a contact region (3) for contacting the contact region (14) of an abutment (12), wherein said contact region (3) comprises an indentation (4) suitable to insert a screw, wherein the contact surface of said indentation (4) with said screw comprises a threaded part and wherein said contact region (3) further comprises securing means (5) in the form of a multifaced protrusion (6) or indentation (7) preventing rotation of an engaged abutment (12), and
(ii) an abutment (12) made of a biocompatible synthetic material, comprising a prosthetic head (13) and a contact region (14) for contacting the contact region (3) of said dental implant (1) and a bore (19) extending through said prosthetic head and through the contact region (14), suitable to insert a screw into said dental implant (1), wherein said contact region (14) further comprises securing means (16) in the form of a multifaced protrusion (17) or indentation (18) preventing rotation of said abutment (12) with respect to said dental implant (1), if engaged with said securing means (5).

3. The hybrid two-part dental implant according to claim 2, further comprising a screw made of biocompatible ceramics or biocompatible synthetic material.

4. The hybrid two-part dental implant according to claims 1 to 3, wherein the thread-profile of said outer threaded part (2) of said dental implant (1) comprises an apical flank and a distal flank, wherein an acute angle (β) between the apical flank and the longitudinal axis is smaller than an acute angle (γ) between the distal flank and the longitudinal axis.

5. The hybrid two-part dental implant according to claims 1 to 4, wherein a surface area of said outer threaded part (2) of the dental implant (1) has a micro-roughness of between 2 micron and 50 micron.

6. The hybrid two-part dental implant according to claims 1 to 5, wherein said outer threaded part (2) of the dental implant (1) has a length of between 5 and 20 mm and an outer diameter of between 2 and 7 mm.

7. The hybrid two-part dental implant according to claims 4 to 6, wherein the apical flank of the dental implant (1) has an acute angle (β) to the longitudinal axis of between 5 and 20 degree; the distal flank has an acute angle (γ) to the longitudinal axis of between 40 and 70 degree.

8. The hybrid two-part dental implant according to claims 1 to 7, wherein said securing means (5) of the dental implant (1) is of polygonal shape (8).

9. The hybrid two-part dental implant according to claims 1 to 8, wherein the dental implant (1) further comprises a transgingival part (9) in one piece.

10. The hybrid two-part dental implant according to claims 1 to 9, wherein the biocompatible ceramics comprises a ceramic material selected from the group consisting of zirconium oxide, aluminium oxide, yttrium oxide, hafnium oxide, silicon oxide, magnesium oxide, cerium oxide and mixtures thereof.

11. The hybrid two-part dental implant according to claims 1 to 10, wherein the biocompatible synthetic material is selected from the group consisting of polycarbonate (PC), polyamide (PA), polyimide (PI), polyetheretherketone (PEEK), polyphenylenesulfide (PPSE), epoxide resin (EP), unsaturated polyester (UP), phenol resin (PF), melamine resin (MF), cyanate ester (CA), polytetrafluoroethylene (PTFE) and mixtures thereof.

12. The hybrid two-part dental implant according to claims 1 and 4 to 11, wherein said protrusion (15a) or indentation (15b) of the abutment (12), is essentially free of any threaded parts.

13. The hybrid two-part dental implant according to claims 1 to 12, wherein said prosthetic head (13) of said abutment (12) has a diameter of between 1 and 11 mm, which might vary over the length, and a length of between 2 and 10 mm measured from the contact region (14) to the coronal region of said abutment.

14. The hybrid two-part dental implant according to claims 1 and 4 to 13, wherein said abutment (12) further comprises a crown or superstructure in one piece.

15. The hybrid two-part dental implant according to claims 1 to 14, wherein the dental implant (1) and the abutment (12) are connected to each other with an adhesive.

16. The hybrid two-part dental implant according to claims 3 to 15, wherein the screw inserted through the bore (19) is connected with the indentation (4) of the dental implant (1) with an adhesive.

17. The hybrid two-part dental implant according to claim 15 or 16, wherein said adhesive is selected from the group consisting of zinc phosphate cement, carboxylate cement, glass ionomer cement, hybrid cement, composite cements, cyanacrylate, and polyacrylate.

18. A hybrid three-part dental implant comprising a hybrid two-part dental implant according to claims 1 to 17 and further comprising a crown or superstructure.

19. Use of hybrid two-part dental implant according to claim 1 or 17 or of a hybrid three-part dental implant of claim 18 for dental implantation.

20. Use of a dental abutment made of a biocompatible synthetic material in combination with a dental implant made of biocompatible ceramics for dental implantation.

21. Use of claim 20, wherein the biocompatible synthetic material is selected from the group consisting of PC, PA, PI, PEEK, PPSE, EP, UP, PF, MF, CA, PTFE and mixtures thereof.

22. Use of claim 20 or 21, wherein the biocompatible ceramic comprises a ceramic material selected from the group consisting of zirconium oxide, aluminium oxide, yttrium oxide, hafnium oxide, silicon oxide, magnesium oxide, cerium oxide and mixtures thereof.

23. Use according to any of claims 21 to 22, wherein the hybrid two-part dental implant is positioned in the jaw bone of a patient.
